(19) Europäisches Patentamt
European Patent Office
Office européen des brevets

(11) Veröffentlichungsnummer: **0 363 628 A1**

(12) # EUROPÄISCHE PATENTANMELDUNG

(21) Anmeldenummer: 89116254.7

(51) Int. Cl.5: C08G 69/16 , C08G 69/20

(22) Anmeldetag: 02.09.89

(30) Priorität: 17.09.88 DE 3831707

(43) Veröffentlichungstag der Anmeldung: 18.04.90 Patentblatt 90/16

(84) Benannte Vertragsstaaten: DE FR GB IT NL

(71) Anmelder: BAYER AG
D-5090 Leverkusen 1 Bayerwerk(DE)

(72) Erfinder: Heinz, Hans-Detlef, Dr.
Breslauer Strasse 31
D-4150 Krefeld(DE)
Erfinder: Meyer, Rolf-Volker, Dr.
Buchheimer Strasse 23
D-4150 Krefeld(DE)
Erfinder: Schulte, Helmut, Dr.
Horstdyk 73a
D-4150 Krefeld(DE)
Erfinder: Zimmermann, Franz
Mecklenburgstrasse 7
D-4040 Neuss(DE)

(54) **Hochmolekulare (Co)Polyamide und Verfahren zu ihrer Herstellung.**

(57) Die Erfindung betrifft hochmolekulare (Co)Polyamide und ein Verfahren zur beschleunigten Polyamidherstellung während der Schmelzpolykondensation unter Verwendung von Aminocaprolactam (ACL) und/oder Lysinkomponenten und unter Zusatz von Katalysatoren, wie auch, falls erwünscht, eine beschleunigte Festphasen-Nachkondensation der katalysatorhaltigen (Co)Polyamide sowie die nach den Verfahren hergestellten Polyamide.

EP 0 363 628 A1

## Hochmolekulare (Co)Polyamide und Verfahren zu ihrer Herstellung

Die Erfindung betrifft hochmolekulare (Co)Polyamide und ein Verfahren zur beschleunigten (Co)-Polyamidherstellung während der Schmelzpolykondensation unter Verwendung einer Kombination aus α-Aminocaprolactam ACL und/oder Lysinkomponenten sowie Polycarbonsäuren und bekannten von Katalysatoren, wie auch, falls erwünscht, eine beschleunigte Festphasen-Nachkondensation der katalysatorhaltigen (Co)Polyamide, sowie die nach den Verfahren hergestellten Polyamide.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall allein oder auch in Kombination mit z.B. Verarbeitungshilfsmitteln, polymeren Legierungspartnern oder auch mineralischen Verstärkungsmaterialien (wie z.B. Füllstoffen oder Glasfasern), zu Werkstoffen mit speziell eingestellten Eigenschaftskombinationen ausgerüstet werden können.

So werden Polyamide in großen Mengen zur Herstellung von Fasern, Kunststoff-Formteilen und Folien aber auch z.B. als Schmelzkleber und Hilfsmittel in einer Vielzahl von Anwendungen technisch verwendet.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten, Aminocarbonsäuren und Lactamen, im wesentlichen nur die Polykondensationsreaktion in Frage (siehe Vieweg, Müller; Kunststoff-Handbuch, Bd. VI, 5. 11 ff, Carl-Hanser-Verlag, München 1966).

Auch bei der Herstellung von Polyamiden aus Lactamen, z.B. von Polyamid-6 aus ε-Caprolactam, hat die hydrolytische Polymerisation die größte Bedeutung.

Zur Herstellung der Polyamide sind eine Vielzahl von Verfahrensweisen bekannt geworden, wobei je nach gewünschten Endprodukt unterschiedliche Monomerbausteine zur Bestimmung der Matrixnatur, verschiedene Kettenregler zur Einstellung eines angestrebten mittleren Molgewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden. Kontinuierliche Herstellungsverfahren sind ebenso bekannt wie die diskontinuierliche Produktion, z.B. in Autoklaven.

Allen Methoden zur Herstellung von Polyamiden durch Polykondensation bzw. durch hydrolytische Polymerisation der polyamidbildenden Komponente (Diamin/Dicarbonsäure-Gemisch bzw. Nylon-Salze, Aminocarbonsäuren, Lactame) ist jedoch gemeinsam, daß - ausgehend von geeigneten Monomermischungen - die Herstellung der Polyamide i.a. viele Stunden Reaktionszeit in Anspruch nimmt, bis die Polyamide zum Abspinnen von Strängen aus der Polymerschmelze ausreichend hohe Molgewichte erreicht haben bzw. die Molgewichte für den geplanten Praxiseinsatz ausreichend hoch sind.

Unabhängig von der beträchtlichen Reaktionszeit der Schmelzepolymerisation ist in vielen Fällen noch eine Nachkondensation - z.B. in der festen Phase - erforderlich, um die für viele Anwendungen erforderlichen, noch höheren Molekulargewichte zu erzielen.

Die zur Herstellung der Polyamide erforderlichen hohen Reaktionszeiten begrenzen somit gravierend die Kapazität der Herstellanlagen und sind insbesondere, da die Reaktion bei Temperaturen von über 200 °C, meist über 250 °C, immer aber oberhalb des Schmelzpunktes des herzustellenden Produktes erfolgen muß, in hohem Maße energieverbrauchend und kostspielig/anlagenintensiv.

Eine wesentliche Verkürzung der Reaktionszeiten bei der Herstellung von Polyamiden - ohne Verzicht auf die bekannten guten anwendungstechnischen Eigenschaften der Produkte - wäre somit als großer, insbesondere kostensparender Fortschritt anzusehen.

Weiterhin wäre es wünschenswert, Produkte mit sehr hoher Schmelzviskosität, die bisher nur sehr aufwendig und langwierig, wenn überhaupt, herstellbar sind, für Anwendungen im Extrusionsbereich schneller und einfacher als bisher üblich, herstellen zu können.

Überraschenderweise wurde nun gefunden, daß durch eine speziell gewählte Additivkombination, welche dem Polyamid-bildenden Reaktionsgemisch, d.h. den üblichen polyamidbildenden Ausgangsstoffen, zugesetzt werden, beide wünschenswerten Ziele in einfacher Weise erreicht werden können, daß nämlich die Polyamidkondensation sehr stark beschleunigt wird und daß auch durch Festphasennachkondensation Produkte mit sehr hoher Schmelzviskosität schnell und einfach herstellbar sind, wobei bei letzteren die Schwierigkeit bei der Herstellung sehr hochviskoser Schmelzen umgangen werden.

Gegenstand der Erfindung ist daher ein Verfahren zur Herstellung hochmolekularer (Co)Polyamide durch Schmelzekondensation, dadurch gekennzeichnet, daß die Polykondensation bei Anwesenheit einer speziellen Additiv-Kombination, bestehend aus

a) 0,05 bis 1,5, bevorzugt 0,15 bis 1,0 und besonders bevorzugt 0,2 bis 0,8 Gew.-% der Verbindungen der allgemeinen Formeln (I) und/oder (II)

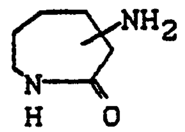

(I)

(Aminocaprolactam, vorzugsweise α-Aminocaprolactam)

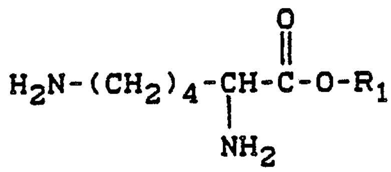 ,

(II)

(Lysin-Komponenten)

b) einer Polycarbonsäure, vorzugsweise einer Dicarbonsäure, in etwa äquivalenten Mengen zur freien Aminogruppe in I, bzw. der zweiten Aminogruppe in II),

c) und 0,001 bis 2 Gew.-%, vorzugsweise 0,005 bis 0,8 Gew.-%, besonders bevorzugt 0,01 bis 0,5 Gew.-%, eines üblichen Polyamid-Katalysators, ausgewählt aus den Verbindungen der allgemeinen Formeln (III) bis (VII),

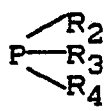

(III)

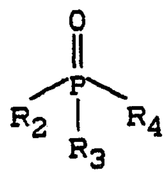

(IV)

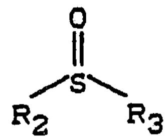

(V)

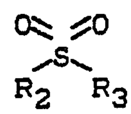

(VI)

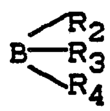 ,

(VII)

wobei

$R_1$ Wasserstoff oder $C_1$-$C_{18}$-Alkyl oder $C_6$-$C_{14}$-Aryl, bevorzugt H,

$R_2$-$R_4$ unabhängig voneinander bevorzugt -OH, -OM, wobei M ein ein- oder mehrwertiges (Pseudo)Metall ist, $C_{1-18}$-(Ar)alkoxy, $C_{6-20}$-(Alk)aryloxy, wobei die $C_{1-18}$-(Ar)alkyl bzw. $C_{6-20}$-(Alk)aryl-Reste substituiert sein können, und wobei die Reste $R_2$-$R_4$ teilweise auch gegen Wasserstoff, $C_{1-18}$-(Ar)alkyl oder $C_{6-20}$-(Alk)aryl ausgetauscht sein können, bedeuten,

gegebenenfalls in Gegenwart von üblichen Zusatzstoffen, durchgeführt wird und wobei der Schmelzpolykondensation gegebenenfalls eine Festphasen-Nachkondensation folgt.

Gegenstand der Erfindung sind auch die nach dem genannten Verfahren herstellten (Co)Polyamide sowie ihre Verwendung zur Herstellung von geformten Teilen wie z.B. Formkörpern, Fasern, Folien, Halbzeugen u.a.m. Die Festphasen-nachkondensierten (Co)Polyamide sind besonders zur Herstellung von geformten Teilen durch Extrusion geeignet.

Die Verbindungen der allgemeinen Formeln (I) und (II) sind prinzipiell bekannt oder können nach prinzipiell bekannten Verfahren hergestellt werden. Ein spezifisches Beispiel für eine Verbindung der allgemeinen Formel (I) ist α-Amino-ε-caprolactam (VIII) (ACL),

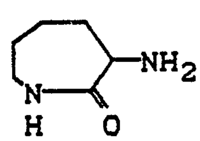

(VIII)

welches gleichzeitig auch die bevorzugte Verbindung dieses Typs darstellt.

Spezifische Beispiele für Verbindungen der allgemeinen Formel (II) sind Lysin, Lysinhydrat, Lysinmethylester, Lysinethylester und Lysinphenylester. Bevorzugte Verbindungen sind Lysin (IX) und Lysinhydrat (X), wobei Lysin in Form eines inneren Salzes (unter Bindung der einen Aminogruppe) vorliegt.

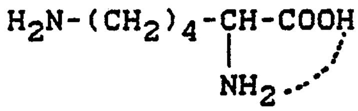

(IX)

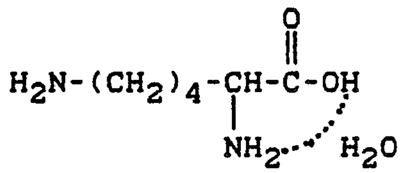

(X)

Es sind viele Versuche beschrieben worden, durch Cokondensation mit basische Gruppen enthaltenden, polyamidbildenden Bausteinen basische Polyamide zu erhalten, die insbesondere bei Einsatz als Fasern mit sauren Farbstoffen leichter anfärbbar sind. So wird in der US 3 651 023 z.B. offenbart, daß mit einer Reihe von verschiedenen derartigen Zusatzstoffen eine verbesserte Anfärbbarkeit von Polyamidfasern und eine höhere Farbintensität erreichbar ist.

Als Zusatzstoffe werden dort auch α-Aminocaprolactam und Lysin genannt, wobei aber die in den Beispielen 1, 2, 8 und 9 bis 12 beschriebenen PA 6-Typen, von besserer Anfärbbarkeit abgesehen, sich nicht charakteristisch von den Vergleichsversuchen unterscheiden. Im Gegenteil sogar wirkt Lysin (siehe Beispiel 2 der US 3 651 023) in der Menge von 5 % als Kettenabbrecher, da das entstehende PA 6 aufgrund zu geringer Schmelzviskosität nicht mehr versponnen werden kann.

Die Anmeldung gibt keinerlei Hinweis darauf, daß durch Einsatz der erfindungsgemäßen Additiv-Kombination die Polyamidkondensation sehr stark beschleunigt werden kann und daß Polyamide mit einer offensichtlich teilverzweigten Struktur erhalten werden.

Desgleichen fehlt jeder Hinweis darauf, daß durch die genannte Maßnahme die Festphasennachkondensation stark beschleunigt werden kann. Dies ist umso mehr der Fall, da die anderen, in der US 3 651 023 genannten Zusätze diesen Effekt nicht zeigen.

In der EP 0 013 553 wid beschrieben, daß ein Polymer aus α-Amino-caprolactam bisher nicht bekannt ist und vermutet, daß wegen der Reaktionsmöglichkeiten der Aminogruppe Vernetzung resultieren müsse.

EP 0 013 553 beschreibt Polyamide aus N,N-Dialkyl-substituierten α-Amino-ε-caprolactamen, die sich durch spezielle Löslichkeitseigenschaften auszeichnen. Auch diese substituierten ACL zeigen in der erfindungsgemäßen Kombination keinen beschleunigenden Einfluß.

In der japanischen Auslegeschrift 12 139/64 wird die Verwendung von hergestellten Salzen aus Lysin und bestimmten aliphatischen Dicarbonsäuren zur Herstellung von Polyamiden offenbart. Diese Salze werden in einer Menge von 0,5 bis 5,0 Gew.-%, bevorzugt 1,0 bis 3,0 Gew.-%, zugesetzt. Dieses Verfahren weist eine Reihe von Nachteilen auf; zum einen muß in einem gesonderten Schritt das Salz aus Lysin und der Dicarbonsäure hergestellt werden, was den Prozeß verkompliziert und verteuert. Außerdem wirkt sich in Anbetracht der großen Menge von bevorzugt 1 bis 3 Gew.-% der relativ hohe Preis von Lysin in der Wirtschaftlichkeit negativ aus. Desgleichen führt die Anwendung dieser hohen Menge zu sehr stark verfärbten Produkten. Weiterhin fehlt in der genannten Anmeldung jeglicher Hinweis darauf, daß eine Beschleunigung der Festphasennachkondensation möglich ist bzw. Produkte besonders hoher Schmelzviskosität und teilverzweigter Struktur herstellbar sind.

Die Verbindungen der allgemeinen Formeln (III) bis (VII) sind an sich bekannte Katalysatoren der Polyamidherstellung, wie sie beispielsweise in JA 47-34 592, 47-34 593, DE 2 131 931, US 4 471 081, 4 433 116, 3 509 107, 3 551 548, EP 0 087 385, FR 1 485 341, J. Polym. Sci. Polym. Chem. Ed. 22, 2567 (1984) und in L.B. Sokolov, Solidphase Polymerization, Syntheses by polycondensation, Publ. Israel Program for Scientific Translation, 1968, beschrieben sind.

Beispiele für Verbindungen der allgemeinen Formel (III) sind Triethylphosphit, Tributylphosphit, Triphenylphosphit, Tris-(2,4-di-t-butyl-phenyl)-phosphit und Tris-(nonyl-phenyl)phosphit.

Beispiele für Verbindungen der allgemeinen Formel (IV) sind Phosphorsäure, Phosphorsäureester, z.B. Phosphorsäureethylester, Phosphorsäuediethylester, Triethylphosphat, Triphenylphosphat, Phosphonsäuren oder Phosphonsäureester, z.B. Methylphosphonsäure, Phenylphosphonsäure, hypophosphorige Säure und phosphorige Säure.

Beispiele für Verbindungen der allgemeinen Formel (V) sind Schweflige Säure und Alkylsulfinsäuren, z.B. Methylsulfinsäure.

Beispiele für Verbindungen der allgemeinen Formel (VI) sind Schwefelsäure, Alkylsulfonsäuren wie

Methylsulfonsaure und Arylsulfonsäuren wie Phenylsulfonsäure.

Ein Beispiel für eine Verbindung der allgemeinen Formel (VII) ist Borsäure.

Bevorzugte Katalysatoren sind die der allgemeinen Formel (III) und (IV).

Die erfindungsgemäßen Additiv-Kombinationen (aus Aminolactamen und/oder Lysin-Komponenten einerseits und Katalysator (III)-(VII) des Standes der Technik) sind überraschenderweise viel wirksamer als die Komponenten (III)-(VII) allein.

Ausgangsmaterialien für Polyamide:

Als Lactame im Sinne der Erfindung sind Lactame mit 5 bis 13 Ringgliedern wie z.B. ε-Caprolactam, Önanthlactam, Capryllactam und Laurinlactam alleine oder im Gemisch geeignet, vorzugsweise ε-Caprolactam und Laurinlactam. Besonders bevorzugt wird ε-Caprolactam eingesetzt.

Geeignete Diamine sind z.B. $C_{2-20}$-Alkylendiamine wie Tetramethylendiamin, Hexamethylendiamin, Dodecamethylendiamin u.a.m. und Cycloalkylendiamine wie 1,4-Diaminocyclohexan, Bis-(4-aminocyclohexyl)methan, 5-Amino-1-aminomethyl-1,3,3-trimethylcyclohexan (Isophorondiamin) u.a.m., wie sie nach dem Stand der Technik vielfach beschrieben sind.

Geeignete Dicarbonsäuren sind aliphatische $C_{2-38}$-Dicarbonsäuren wie z.B. Adipinsäure, Sebazinsäure, Azelainsäure, Dodecandisäure und dimerisierte Fettsäuren, aromatische $C_{6-14}$-Dicarbonsäuren wie z.B. Isophthalsäure, Terephthalsäure u.a. sowie Cycloalkylendicarbonsäuren wie z.B. 1,3- oder 1,4-Cyclohexandicarbonsäure. Anstelle der Dicarbonsäuren selbst in den Diamin/Dicarbonsäure-Mischungen können u.U. auch geeignete Derivate wie z.B. Ester eingesetzt werden.

Geeignete Aminocarbonsäuren sind z.B. $C_{4-18}$-Aminocarbonsäuren wie z.B. Aminocapronsäure, Aminoundecansäure und Aminoheptansäure.

Bevorzugte Diamine zur Polyamidherstellung sind Hexamethylendiamin, Tetramethylendiamin und Dodecamethylendiamin.

Bevorzugte Dicarbonsäuren sind Adipinsäure, Azelainsäure, Sebacinsäure, Decamethylendicarbonsäure und Dimerfettsäuren.

Bevorzugte Aminocarbonsäuren sind Aminocapronsäure und Aminoundecansäure.

Bevorzugte Diamin/Dicarbonsäure-Mischungen bzw. Nylon-Salze sind solche aus Hexamethylendiamin und Adipinsäure bzw. Sebacinsäure bzw. Azelainsäure, solche aus Tetramethylendiamin und Adipinsäure sowie solche aus Dodecamethylendiamin und Decamethylendicarbonsäure.

Die Polyamid-Bausteine konnen in praktisch beliebigen Gemischen eingesetzt werden; bevorzugt sind allerdings aliphatische Polyamide bzw. solche, die nur einen untergeordneten Gehalt an aromatischen Einheiten (<50 Gew.-%) enthalten.

Die bevorzugt in Kombination mit den Verbindungen der Formeln (I) und (II) einzusetzenden Dicarbonsäuren werden z.B. aus den vorher genannten ausgewählt.

Die Zugabe der erfindungsgemäßen Beschleunigerkombination (I und/oder II + Polycarbonsäure und Katalysatoren (III)-(VII)) erfolgt getrennt oder gemeinsam, in jedem Fall vorteilhaft aber vor oder zu Beginn der Polykondensation.

Es ist ebenso möglich, die Reaktionsbeschleunigung durch PA-Synthese bei niedrigerer Temperatur zu nutzen. Dies führt z.B. bei der Polyamid 6-Herstellung aus ε-Caprolactam zu höheren Polyamid-Ausbeuten bzw. der Temperatur entsprechend niedrigeren Monomer-Oligomer-Extrakten.

Die erfindungsgemäß erhaltenen Polyamide zeigen eine ausgeprägte Strukturviskosität.

Die erfindungsgemäß hergestellten Polyamide können in bekannter Weise aus der Schmelze, vorzugsweise in ein Wasserbad, ausgetragen, gehäckselt, gegebenenfalls extrahiert und getrocknet werden.

Aus den Polyamiden können in ebenso an sich bekannter Weise durch thermoplastische Verarbeitung Formkörper, Fasern und Folien hergestellt werden. Bevorzugt sind zur Verarbeitung der Festphasennachkondensierten Polyamide hoher Schmelzviskosität, z.B. Extrusions- oder Blasformverfahren.

Der Polykondensationsansatz kann auch Stabilisatoren wie z.B. Metallsalze (Cu-, Mn-Salze), sterisch gehinderte Phenole bzw. -Amine u.a. übliche Zusätze in üblichen Mengen oder in Mengen für einen Masterbatch-Ansatz enthalten.

Weiterhin können den Polyamiden Zusatzstoffe wie Nucleierungsmittel, Pigmente, Farbstoffe, Ruß, Verstärkungsmittel und Verstärkungsfasern, z.B. Kaolin, Glasfasern oder ähnliche und andere enthalten sein. Den Polyamiden können beliebige Schlagzähmodifikatoren, wie sie im Stand der Technik in sehr großer Anzahl bekannt sind, zugemischt werden.

Es können auch Monocarbonsäuren als Kettenabbrecher in üblichen Mengen anwesend sein.

Die Polykondensation kann kontinuierlich oder diskontinuierlich erfolgen. (Unter Polykondensation wird

hier sowohl die Polykondensation - z. B. von Nylon-Salzen, wie auch die hydrolytische Polymerisation von Lactamhaltigen Ausgangsstoffen - verstanden.)

Das erfindungsgemäße Verfahren, nämlich die Beschleunigung der Polyamid-Bildung durch den Zusatz der Kombination aus Lysin-Komponenten bzw. Aminocaptolactamen a), Polycarbonsäuren b) sowie der Katalysatoren c), läßt sich insbesondere auch zur beschleunigten Herstellung von Konzentraten (Masterbatches) auf Basis von Polycaprolactamen oder anderen Polyamiden, z.B. Farb(Pigment)-, Stabilisator-, Entformungsmittel-, Mattierungsmittel- oder Nukleiermittelkonzentraten u.a.m., durch Herstellung der Polyamide bei Anwesenheit relativ großer Mengen der Farbstoffe, Stabilisatoren, Entformungsmittel, Mattierungsmittel ($TiO_2$), Nukleiermittel bzw. der anderen Hilfsstoffe nutzen.

Gegenstand der Erfindung sind daher insbesondere auch Konzentrate, z.B. Farb(Pigment)-, Stabilisator-, Entformungsmittel-, Mattierungsmittel- oder Nukleiermittel-Konzentrate u.a.m., hergestellt durch Polykondensation nach dem erfindungsgemäßen Verfahren. Die erfindungsgemäß erhaltenen Konzentrate können dann in übliche Thermoplaste, bevorzugt in übliche Polyamide, in üblicher Weise eingearbeitet werden.

Gegenstand der Erfindung sind auch die Thermoplaste, welche mit erfindungsgemäß erhaltenen Konzentraten ausgerüstet sind, sowie Formkörper, Folien, Fasern und andere Gegenstände aus diesen Thermoplasten.

Z.B. kann ein 30 % Titandioxid-Mattierungsmittel für Polyamid-(Fasern)-Konzentrat durch das erfindungsgemäße Verfahren in stark verkürzter Reaktionszeit hergestellt werden, wodurch die Herstellungskosten sich deutlich verringern. Das erfindungsgemäße Konzentrat kann dann zur Herstellung von Polyamidfasern verwendet werden. Diese erfindungsgemäßen Fasern weisen die gleichen guten Eigenschaften wie konventionelle Fasern auf, sind jedoch mit geringeren Herstellungskosten behaftet.

In gleicher Weise können z.B. Farbstoff/Pigment-Konzentrate für übliche Polyamid-Spritzgußmassen hergestellt werden. Hier kann neben den geringeren Herstellungskosten insbesondere auch aufgrund der verringerten thermischen Belastung die Farbqualität der mit den erfindungsgemäßen Konzentraten ausgerüsteten Polyamid-Spritzgußmassen verbessert sein.

In einer anderen bevorzugten Ausführungsform der Erfindung können die erfindungsgemäß hergestellten (Co)Polyamide auch einer anschließenden Festphasennachkondensation unterworfen werden, wobei PA 6 und 66 bzw. 6/66-Copolyamide bevorzugt sind. Besonders bevorzugt sind PA 6 und Caprolactam-reiche Polyamide.

Dazu wird (Co)Polyamid-Granulat in einem Temperaturbereich von 140 bis 250 °C, bevorzugt 160 bis 230 °C, immer jedoch mindestens 10 °C, bevorzugt mindestens 20 °C unterhalb der Schmelztemperatur des jeweiligen Polyamids, im Vakuum oder unter einem Inertgas(strom) für eine gewünschte Zeit erhitzt. Je höher die Zeit gewählt wird, desto höher die erreichten Molekulargewichte.

Die Festphasennachkondensation kann diskontinuierlich, z.B. im Taumeltrockner oder Wendelmischer, und kontinuierlich erfolgen. Bevorzugt wird als Inertgas $N_2$ verwendet.

Die Nachkondensationszeiten werden zweckmäßig im Bereich von 0,5 bis 30 h, bevorzugt 1,0 bis 20 h, gewählt, wobei die längeren Reaktionszeiten bevorzugt bei niedrigeren Temperaturen und umgekehrt angewendet werden.

Auf diese Weise sind Festphasen-nachkondensierte (Co)Polyamide, welche Lysin und/oder Aminocaprolactam eingebaut enthalten, mit sehr hoher Schmelzviskosität, einfach, gut und beschleunigt herstellbar, welche Polyamide ebenfalls Gegenstand der Erfindung sind. Diese Typen sind besonders für den Einsatz im Extrusionsbereich geeignet.

Besonders bevorzugtes Polyamid ist hier PA 6 bzw. solche Polyamide, die reich an Caprolactam-Einheiten sind.

Die (Co)Polyamide, hergestellt nach dem erfindungsgemäßen Verfahren, können für alle Bereiche, in denen Polyamide üblicherweise eingesetzt werden, verwendet werden, z.B. für den Spritzguß, die Herstellung von Fasern sowie Folien und anderen Gegenständen. Sie weisen im wesentlichen dasselbe Eigenschaftsbild auf wie Vergleichsprodukte, (sind deutlich strukturviskos), sind aber ökonomischer und schneller herstellbar; dieser unerwartete und nicht vorhersehbare Effekt wird nur durch die erfindungsgemäße Additiv-Kombination ermöglicht. Durch die Festphasen-Nachkondensation werden so weiterhin (Co)Polyamide technisch zugänglich, welche durch direkte Schmelzkondensation nicht vernünftig herstellbar und brauchbar zugänglich sind, da ihre Schmelzviskosität eine Handhabung in Kesseln, Autoklaven etc. sehr schwierig gestaltet.

Die nachfolgenden Beispiele erläutern die Erfindung, ohne sie darauf einzuschränken.

Die Messung der Schmelzviskosität erfolgte mit einem Contraves-RM 300-Platte/Kegel-Viskosimeter.

Beispiele

Beispiel 1

92,5 g Caprolactam, 9,4 g Aminocapronsäure, 1,025 g 50 %ige wäßrige α-Amino-ε-caprolactam-(ACL)-Lösung, 0,38 g Azelainsäure und 0,52 g Tris-(2,4-di-t-butyl)phenylphosphit wurden in einen 250 ml-Rundkolben eingewogen. Nach Inertisierung mit $N_2$ wurde unter Rühren auf 200 °C aufgeheizt und 1 h bei dieser Temperatur gehalten. Anschließend wurde die Temperatur auf 270 °C erhöht und unter langsamem Rühren 1 h 20 min lang polykondensiert. Der Kolben wurde abgenommen und nach Erkalten des Polymeren zerschlagen. Das Polymere wurde gehäckselt und mit Wasser 24 h lang extrahiert. Die Daten sind in Tabelle 1 zusammengestellt.

Vergleichsversuch 1

In derselben Weise wurde PA 6 ohne die Kombination aus ACL und Azelainsäure (AzS) hergestellt. Die Daten sind in Tabelle 1 zusammengestellt.

Man sieht, daß ohne ACL/AzS die Reaktionszeit bis zum Erreichen derselben Lösungsviskosität viel höher ist.

Beispiele 2 bis 4

In der für Beispiel 1 beschriebenen Weise wurden PA 6-Proben unterschiedlichen Molekulargewichts aus 81,5 g Caprolactam und 9,4 g Aminocapronsäure durch unterschiedlich lange Reaktionszeiten hergestellt. Die Additiv-Kombination bestand aus 1,025 g 50 %iger wäßriger ACL-Lösung, 0,38 g Azelainsäure und 0,05 g Triphenylphosphit. Die Extraktion erfolgte mit Methanol. Die Daten sind in Tabelle 1 zusammengestellt.

Vergleichsbeispiele 2 bis 4

In derselben Weise wurden entsprechende PA 6-Proben ohne ACL und Azelainsäure hergestellt. Die Daten sind in Tabelle 1 zusammengestellt.

Beispiel 5

In der für die Beispiele 2 bis 4 beschriebenen Weise wurde ein PA 6 aus 81,5 g Caprolactam und 9,4 g Aminocapronsäure hergestellt. Als Additiv-Kombination wurden 0,66 g Lysinhydrat, 0,38 g Azelainsäure und 0,05 g Triphenylphosphit zugegeben. Die Polykondensationszeit betrug 1 1/2 h. Die Daten sind in Tabelle 1 enthalten.

Vergleichsbeispiel 5

Beispiel 5 wurde ohne Zugabe von Lysinhydrat und Azelainsäure wiederholt. Die Daten sind in Tabelle 1 enthalten.

Tabelle 1

| Beispiel | Zeit bei 270 °C (h) | $\eta$rel 1) | SV 2) (Pas) |
|---|---|---|---|
| 1 | 1,33 | 3,8 | - |
| Vergleichsbeispiel 1 | 3 | 3,9 | - |
| 2 | 0,75 | 3,0 | - |
| 3 | 1,5 | 5,1 | ca. 10000 3) |
| 4 | 3,0 | 6,2 | - |
| Vergleichsbeispiel 2 | 0,75 | 2,5 | - |
| Vergleichsbeispiel 3 | 1,5 | 3,2 | 500 |
| Vergleichsbeispiel 4 | 3,0 | 4,8 | - |
| 5 | 1,25 | 3,3 | 2200 |
| Vergleichsbeispiel 5 | 1,25 | 3,2 | 420 |

1) Relative Lösungsviskosität; 1 %ig in m-Kresol, 25 °C
2) Schmelzviskosität bei 270 °C; Schergefälle 2-3 $s^{-1}$
3) Die Probe ist trotz der sehr hohen Schmelzviskosität einwandfrei in m-Kresol löslich und damit nicht vernetzt.

Beispiele 6 bis 10

In der für Beispiel 5 beschriebenen Weise wurde eine Serie von 6/66-Copolyamiden hergestellt. Als Additiv-Kombination wurden 1,0 g 50 %ige wäßrige ACL-Lösung, 0,37 g Azelainsäure und 0,05 g Triphenylphosphit eingesetzt.
Die Daten sind in Tabelle 2 enthalten.

Vergleichsbeispiele 6 bis 10

In derselben Weise wurden entsprechende Co-PA ohne ACL und Azelainsäure hergestellt.
Die Daten sind in Tabelle 2 enthalten.

Beispiele 11 bis 13

In der für die Beispiele 6 bis 10 beschriebenen Weise wurden Copolyamide aus Caprolactam und AH-Salz hergestellt. Die Additiv-Kombination bestand aus 0,65 bis 0,66 g Lysinhydrat, 0,37 bis 0,38 g Azelainsäure und 0,05 g Triphenylphosphit.
Die Daten sind in Tabelle 1 enthalten.

Vergleichsbeispiele 11 bis 13

In der für die Beispiele 11 und 12 beschriebenen Weise wurden Copolyamide ohne Lysinhydrat und Azelainsäure hergestellt.
Die Daten sind in Tabelle 2 enthalten.

Tabelle 2

| Beispiel | Zeit bei 270 °C (h) | PA aus | | Co-Pa 6/66 | ηrel | SV bei[1] 270 °C (Pas) |
|---|---|---|---|---|---|---|
| | | Cl | AH-Salz | | | |
| 6 | 1,16 | 90 | 11,6 | ca. 95/5 | 4,2 | - |
| 7 | 0,84 | 75 | 29 | ca. 75/25 | 5,5 | - |
| 8 | 0,50 | 50 | 58 | ca. 50/50 | 3,3 | 3500 |
| 9[2] | 0,33 | 25 | 87 | 25/75 | 3,5 | 890 |
| 10[2] | 0,25 | 15 | 98,5 | 15/85 | 3,0 | - |
| Vergleichsbeispiel 6 | 1,16 | 90 | 11,6 | ca. 95/5 | 3,3 | - |
| Vergleichsbeispiel 7 | 0,84 | 75 | 29 | ca. 75/25 | 3,5 | - |
| Vergleichsbeispiel 8 | 0,50 | 50 | 58 | ca. 50/50 | 2,6 | 260 |
| Vergleichsbeispiel 9[2] | 0,33 | 25 | 87 | 25/75 | 3,2 | 103 |
| Vergleichsbeispiel 10[2] | 0,25 | 15 | 98,5 | 15/85 | 2,7 | - |
| 11 | 1 | 90 | 11,6 | ca. 95/5 | 3,7 | - |
| 12 | 2 | 80 | 20 | ca. 83/17 | 3,4 | 3000 |
| 13 | 0,8 | 75 | 29 | ca. 75/25 | 4,1 | - |
| Vergleichsbeispiel 11 | 1 | 90 | 11,6 | ca. 95/5 | 2,9 | - |
| Vergleichsbeispiel 12 | 2 | 80 | 20 | ca. 83/17 | 3,1 | 225 |
| Vergleichsbeispiel 13 | 0,8 | 75 | 29 | ca. 75/25 | 2,8 | - |

1) bei 1-3 $s^{-1}$
2) bei 280 °C hergestellt

Beispiel 14

Aus 71,6 g Sebazinsäure und 41,1 g Hexamethylendiamin wurde ein PA 6,10 hergestellt. Als Additiv-Kombination wurden 1,0 g 50 %ige wäßrige ACL-Lösung, 0,37 g Azelainsäure und 0,05 g Triphenylphosphit eingesetzt. Die Daten sind in Tabelle 3 enthalten.

Vergleichsbeispiel 14

In derselben Weise wurde ein PA 6,10 ohne ACL und Azelainsäure hergestellt. Die Daten sind in Tabelle 3 enthalten.

Beispiel 15

Wie in Beispiel 13 beschrieben, wurde ein PA 6,10 hergestellt, nur daß die ACL-Menge auf 0,6 g 50 %ige wäßrige Lösung verringert wurde. Die Daten sind in Tabelle 3 enthalten.

Vergleichsbeispiel 15

In derselben Weise wurde ein PA 6,10 ohne ACL und Azelainsäure hergestellt. Die Daten sind in Tabelle 3 enthalten.

Tabelle 3

| Beispiel | Zeit bei 270° C (min) | ηrel | SV[1] (Pa.s) bei 270° C |
|---|---|---|---|
| 14 | 10 | 3,8 | - |
| Vergleichsbeispiel 14 | 10 | 2,2 | - |
| 15 | 105 | 3,7 | 1200 |
| Vergleichsbeispiel 15 | 105 | 3,4 | 500 |

[1] 0,1 - 1,0 $s^{-1}$ Schergefälle.

Beispiel 16

10 kg Caprolactam, 1 kg Wasser, 114 g 50 %ige wäßrige Lysinlösung, 27 g Adipinsäure und 5 g Triphenylphosphit wurden in einen 25 l-Autoklaven eingewogen und nach Inertisierung unter Eigendruck für 1 h auf 200° C erhitzt. Anschließend wurde auf Atmosphärendruck entspannt und gleichzeitig auf 270° C aufgeheizt. Nach Erreichen von Atmosphärendruck wurden 40 l $N_2$ $h^{-1}$ übergeleitet. Der Aufbau der Schmelzviskosität wurde über die Drehzahl eines mit konstanter Kraft verlaufenden Rührwerks bestimmt. Schon bei Erreichen von 260° C war die gewünschte Schmelzviskosität erreicht. Der Rührer wurde ausgeschaltet, das Polyamid eine Stunde absitzen lassen und dann mit $N_2$ aus dem Kessel gedrückt. Über ein Wasserbad wurden die Stränge einer Häckselmaschine zugeführt, mit $H_2O$ extrahiert und getrocknet. Das Produkt besaß eine relative Viskosität von 3,3. Die Schmelzviskosität, gemessen bei 250° C und einem Schergefälle von 2,26 $s^{-1}$, betrug 1035 $Pas^{-1}$.

Ohne Lysin und Adipinsäure wird eine entsprechende Schmelzviskosität erst nach ca. 1,5 - 2,0 Stunden bei 270° C erreichte.

Beispiel 17

In der für Beispiel 16 beschriebenen Weise wurde ein PA 6 bei 235° C hergestellt. Die Reaktionszeit betrug eine halbe Stunde. Die relative Lösungsviskosität des PA 6 (1 % in m-Kresol, 25° C) betrug 3,5.

Beispiel 18

In der für das Beispiel 16 beschriebenen Weise wurde ein PA 6 bei 235° C hergestellt. Zusätzlich zu der Additiv-Kombination wurden noch 22,3 g eines Stabilisatorgemisches aus CuJ, KBr und Triphenylphosphin zugegeben. Die Lösungsviskosität nach 2 h bei 235° C betrug 3,6, der Extraktgehalt (Methanol, 24 h) nur 7,1 %.

Beispiel 19

Ca. 50 g des in Beispiel 16 erhaltenen PA 6-Granulats wurden bei 170° C in einem Stickstoffstrom von 40 l $h^{-1}$ bei 50 $U/min^{-1}$ in einem Rotationsverdampfer 7h lang nachkondensiert. Die Schmelzviskosität des PA 6 beträgt ca. 4750 Pas bei 250° C und 2-3 $s^{-1}$, d.h. die Schmelzviskosität steigt auf den 4,5-fachen Wert.

Ein entsprechend Beispiel 16, jedoch ohne Lysin und Adipinsäure hergestelltes PA 6 steigt in seiner Schmelzviskosität nur von ca. 500 auf ca. 1.200 Pa.s an.

Wie die Beispiele zeigen, kann durch die erfindungsgemäße Additiv-Kombination der Stand der Technik signifikant verbessert werden.

**Ansprüche**

1. Verfahren zur beschleunigten Herstellung hochmolekularer, Lysin und/oder Aminocaprolactam enthaltender (Co)Polyamide durch Schmelzepolykondensation,
dadurch gekennzeichnet, daß die Polykondensation bei Anwesenheit einer speziellen Additiv-Kombination, bestehend aus
a) 0,05 bis 1,5 Gew.-% der Verbindungen der allgemeinen Formeln (I) und/oder (II),

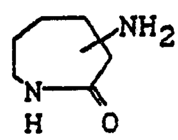

(I)

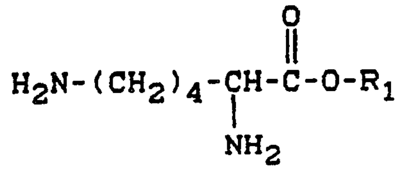

(II)

b) einer Polycarbonsäure, in etwa äquivalenten Mengen zur freien Aminogruppe in (I) bw. der zweiten Aminogruppe in (II),
c) und 0,001 bis 2 Gew.-% eines üblichen Polyamid-Katalysators, vorzugsweise ausgewählt aus den Verbindungen der allgemeinen Formeln (III) bis (VII),

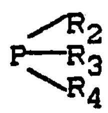

(III)

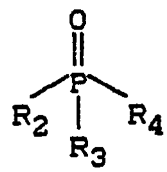

(IV)

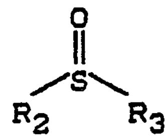

(V)

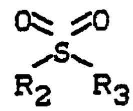

(VI)

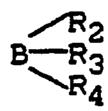

(VII)

wobei
$R_1$ Wasserstoff oder $C_1$-$C_{18}$-Alkyl oder $C_6$-$C_{14}$-Aryl, bevorzugt H,
$R_2$-$R_4$ unabhängig voneinander bevorzugt -OH, -OM, wobei M ein ein- oder mehrwertiges (Pseudo)Metall ist, $C_{1-18}$-(Ar)alkoxy, $C_{6-20}$-(Alk)aryloxy, wobei die $C_{1-18}$-(Ar)alkyl bzw. $C_{6-20}$-(Alk)aryl-Reste substituiert sein können und wobei die Reste $R_2$-$R_4$ teilweise auch gegen Wasserstoff, $C_{1-18}$-(Ar)alkyl oder $C_{6-20}$-(Alk)aryl ausgetauscht sein können, bedeuten,
gegebenenfalls in Gegenwart von üblichen Zusatzstoffen,
durchgeführt wird und wobei der Schmelzepolykondensation gegebenenfalls eine Festphasen-Nachkondensation folgt.

2. Verfahren nach Anspruch 1, dadurch gekennzeichnet, daß die Additiv-Kombination vor oder zu Beginn der Polykondensation zugegeben wird.

3. Verfahren nach Ansprüchen 1 und 2, dadurch gekennzeichnet, daß als Verbindung der allgemeinen Formel (I) bevorzugt α-Amino-ε-caprolactam, als Verbindungen der Formel (II) bevorzugt Lysin, gegebenenfalls in Form einer wäßrigen Lösung, oder Lysinhydrat, als Verbindungen der Formel (III) bevorzugt Ester der phosphorigen Säure, als Verbindungen der Formel (IV) bevorzugt Phosphorsäure, Phosphonsäure, phosphorige Säure, hypophosphorige Säure und ihre Ester bzw. Salze eingesetzt werden.

4. Verfahren nach Ansprüchen 1 bis 3, dadurch gekennzeichnet, daß die Festphasen-Nachkondensation, kontinuierlich oder diskontinuierlich, bei Temperaturen von 140 bis 250 °C, bevorzugt 160 bis 230 °C, immer jedoch mindestens 10 °C, bevorzugt mindestens 20 °C unterhalb des Schmelzpunktes des (Co)-Polyamids, erfolgt.

5. Verfahren nach Ansprüchen 1 bis 4, dadurch gekennzeichnet, daß die Nachkondensationszeit im Bereich von 0,5 bis 30 h, bevorzugt 1,0 bis 20 h, wobei die niedrigeren Reaktionszeiten bevorzugt höheren Temperaturen entsprechen und umgekehrt, durchgeführt wird.

6. (Co)Polyamide, hergestellt nach Verfahren gemäß Ansprüchen 1 bis 5.

7. Verwendung der Polyamide, hergestellt nach Verfahren nach Ansprüchen 1 bis 5, zur Herstellung von Formkörpern, Fasern, Folien und anderen Gegenständen.

8. Verwendung der Polyamide, hergestellt nach Verfahren nach Ansprüchen 1 bis 5, die in der festen Phase nachkondensiert worden sind, zur Herstellung von Folien, Halbzeug, Rohren und anderen Formkörpern.

9. Farb(Pigment)-, Stabilisator-, Entformungsmittel-, Mattierungsmittel-, Nukleiermittelkonzentrate (Masterbatches) und andere Konzentrate, hergestellt durch Polymerisation von Caprolactam und/oder anderer Polyamid bildender Komponenten unter Zusatz der Komponenten a - c bei Anwesenheit relativ großer Mengen der entsprechenden Zusatzstoffe, nach dem Verfahren nach Ansprüchen 1 bis 5.

10. Thermoplaste, enthaltend Konzentrate (Masterbatches) nach Anspruch 9, sowie aus diesen Thermoplasten hergestellte Formkörper, Folien, Fasern und andere Gegenstände.

Europäisches Patentamt

# EUROPÄISCHER RECHERCHENBERICHT

Nummer der Anmeldung

EP 89 11 6254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 907 034 (ICI)<br>* Ansprüche 1-5 * | 1-10 | C 08 G 69/16<br>C 08 G 69/20 |
| A | FR-A-2 097 190 (BAYER)<br>* Ansprüche 1-10 * | 1-10 | |
| A | FR-A-2 210 634 (ICI)<br>* Ansprüche 1-10 * | 1-10 | |
| | | | RECHERCHIERTE SACHGEBIETE (Int. Cl.5) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 11-12-1989 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)